# EUROPÄISCHE PATENTSCHRIFT

(11) **EP 2 478 470 B1**
(45) Veröffentlichungstag und Bekanntmachung des Hinweises auf die Patenterteilung: **25.05.2016**
(21) Anmeldenummer: 10749865.1
(22) Anmeldetag: 07.09.2010
(51) Int. Cl.: G06K 19/077

(54) **RFID-ETIKETT**
RFID LABEL
ÉTIQUETTE RFID

(30) Priorität: 15.09.2009 DE 102009041323
(43) Veröffentlichungstag der Anmeldung: 25.07.2012
(73) Patentinhaber: SMARTRAC TECHNOLOGY GmbH, 01099 Dresden (DE)
(72) Erfinder: KRIEBEL, Frank, 01869 Lichtenberg (DE); NIELAND, Carsten, 99867 Gotha (DE); KUELLIG, Hannes, 01307 Dresden (DE)
(74) Vertreter: Lippert, Stachow & Partner
(86) Internationale Anmeldenummer: PCT/EP2010/063081
(87) Internationale Veröffentlichungsnummer: WO 2011/032856

(56) Entgegenhaltungen:
- JP-A- 2006 146 521

## Beschreibung

Die Erfindung betrifft ein RFID-Transponderetikett, welches auf unterschiedlichen Oberflächen von zu kennzeichnenden Objekten aufgebracht werden kann, wobei unterschiedliche Materialien der Oberfläche des mit dem RFID-Transponderetikett zu kennzeichnenden Objektes die Funktion des Transponders nicht verschieden von der jeweiligen Oberfläche beeinflussen und das RFID-Transponderetikett eine deutlich geringere Bauhöhe gegenüber bisher bekannten Lösungen aufweist. Damit kann man von einem dünnen Etikett sprechen.

Die Datenkommunikation zwischen einem RFID-Transponderetikett und den Schreib-/Lesegeräten mit gekoppelter RFID-Transponderantenne erfolgt mittels elektromagnetischer Wellen, deren Ausbreitung durch verschiedene Materialien, insbesondere metallische Materialien beeinflusst und gestört wird. Für die Kennzeichnung von Objekten mit Oberflächen, welche die elektromagnetischen Wellen beeinflussen, sind Anordnungen erforderlich, welche einen direkten Kontakt des Transponders mit der Oberfläche des Objektes verhindern. Unter RFID-Transponder wird hierbei eine Anordnung aus einer RFID-Transponderantenne und einem mit der RFID-Transponderantenne verbundenen RFID-Transponderchip verstanden. Unter einem RFID-Transponderetikett wird eine Anordnung eines RFID-Transponders auf einem Träger oder Substrat verstanden.

Die Funktionsweise eines RFID-Transponders oder RFID-Transponderetiketts, der/das auf einer Oberfläche von Objekten aufgebracht werden soll, welche die elektromagnetischen Wellen beeinflussen, wie zum Beispiel auf metallischen Oberflächen, kann verbessert werden, indem zwischen dem RFID-Transponder und der Oberfläche auf die er aufgebracht wird, zusätzliche Schichten angeordnet werden, welche zumindest einen Abstand zwischen RFID-Transponder und Oberfläche realisieren.

Durch das Einbringen dieser zusätzlichen Zwischenschicht vergrößert sich die Bauhöhe des RFID-Transponderetiketts erheblich, was zu deutlichen Einschränkungen in der Anwendung führt. Derartige Zwischenschichten können beispielsweise elektrisch isolierende Lagen sein.

Alternativ hierzu kann anstelle der isolierenden Lage eine ferromagnetisch wirkende Schicht eingesetzt werden. Ausführungsformen hierzu sind nachfolgend aufgeführt.

Im "RFID Handbuch", Finkenzeller, ISBN 3-446-19376-6, Ausgabe 1998, Seite 75, Kapitel 4.1.8.3 "Ferritabschirmung in metallischer Umgebung" wird beispielsweise beschrieben, dass durch das Einbringen hochpermeabler Ferrite das Auftreten von Wirbelströmen weitgehend vermieden werden kann. Zitat aus der Quelle: "Eine Montage magnetischer Antennen unmittelbar auf einer metallischen Oberfläche ist jedoch nicht möglich. Durch das Einfügen hochpermeabler Ferrite zwischen Spule und Metalloberfläche kann das Auftreten von Wirbelströmen weitgehend vermieden werden. Damit wird auch eine Antennenmontage auf Metalloberflächen möglich."

In DE 601 02 577 wird ein elektronisches Etikett mit zumindest einem elektronischen Element und einer Spule beschrieben, bei dem die Spule zumindest ein magnetisch reflektierendes Element umfasst, das von der aus der elektronischen Komponente und der Spule gebildeten Baugruppe unabhängig ist. Somit wird eine Anordnung vorgestellt welche das oben benannte physikalische Prinzip aufgreift und appliziert auf den Anwendungsfall in einem elektronischen Etikett.

In US 6,371,380 (1999) wird von einer Verwendung einer magnetisch absorbierenden Platte unter einem IC-Memory Tag gesprochen. Diese ermöglicht das kontaktlose Auslesen von Informationen auch auf metallischen Oberflächen. Es beschreibt die Verwendung einer RFID-Transponderantenne auf einem Substrat mit einem Mikrochip, der das Lesen und Schreiben von Daten mit dem Sendegerät durch Modulation des magnetischen Feldes ermöglicht. Die anhaftende Schicht absorbiert lediglich das magnetische Feld unter dem IC-Memory Tag. Die Permeabilität dieser Schicht ist größer gleich 10.

In OS JP 2001 068916 wird die Verwendung einer Ferritschicht, in Kombination mit einer gut elektrisch leitfähigen Schicht beschrieben, um die Resonanzverschiebung durch das Ferrit zu kompensieren. Diese Metallschicht dient zusätzlich der Erhöhung des Abstandes zwischen Untergrund und Transponder. Der Aufbau besteht aus einer Kombination eines Datenträgers der als Sender/Empfänger agiert, basierend auf der elektromagnetischen Induktion oder eines Mikrowellensystems, einer oberen Ferritschicht und einer unteren, gut leitfähigen Schicht.

DE 101 49 126 sowie DE 103 43 188 beinhalten Verfahren zur Herstellung einer Abschirmung für einen Transponder, der zumindest einen Chip und eine RFID-Transponderantennenstruktur mit einer anwendungsspezifischen räumlichen Ausdehnung aufweist, wobei die Abschirmung auf einem Substrat ausgebildet wird. Die Verfahren umfassen das Aufbringen und Ausrichten von ferromagnetischen Partikeln auf einem Bereich des Substrates, der zumindest die räumliche Ausdehnung der RFID-Transponderantennenstruktur aufweist. Die Partikel werden mittels eines magnetischen Gleichfeldes ausgerichtet und danach fixiert.

In WO 03/067512 A1 wird das Vorhandensein einer flexiblen Kunststofffolie, in welche Ferritpartikel als weichmagnetischer Werkstoff eingelagert sind, als bekannt vorausgesetzt. Das Ferrit in dieser Folie bewirkt eine Erhöhung der Permeabilität. Diese Folie hat eine Dicke von mindestens 1,5 mm und eine Permeabilität µ>10. Eine Reduzierung der Dicke zwischen 0,3 mm und 0,8 mm wird nur durch die Erhöhung der Permeabilität zwischen 13 und 17 erreicht. Die dadurch erreichte Resonanzgüte liegt zwischen 20 und 30.

Daraus resultierend ergibt sich die Notwendigkeit der Abstimmung zwischen Permeabilität und Dicke der Folie und damit der Anpassung auf eine bestimmte Unterlage.

In DE 10 2007 037 293.2 wird die Verwendung einzelner Ferrit-Streifen unterhalb eines RFID-Transponders an Stelle einer ganzflächigen Ausführungsvariante beschrieben. Dieses hochpermeable Abschirmungsmaterial weist entweder eine anisotrope Permeabilität auf, oder wird in wesentlichen Abschnitten zueinander parallel ausgerichtet, wobei die Längskanten der Streifen in der Stromflussrichtung wesentliche Abschnitte der RFID-Transponderantennenstruktur umfassen.

Weiterhin wird in DE 197 33 849 ein Diebstahlsicherungsschild beschrieben welches durch die Kombination mit einem weichmagnetischen Element hinsichtlich der Frequenz auf den Abfragesender abgestimmt werden kann.

Aus der JP 2006 146521 A ist eine drahtlos arbeitende Sende- und Empfangsanordnung bekannt bei welcher die Antenne sowie der IC-Chip auf einem gemeinsamen Trägermaterial aufgebracht sind. Zur Befestigung dieser Sende- und Empfangsanordnung sowie zur Sicherstellung seiner Funktionalität sind unter dem Trägermaterial eine magnetische Schicht, eine paramagnetische Schicht und eine ferromagnetische Schicht vorgesehen.

Es besteht ein Bedarf an RFID-Transponderetiketten, welche auf unterschiedlichen Oberflächen von zu kennzeichnenden Objekten aufgebracht werden können, wobei unterschiedliche Materialien der Oberfläche des mit dem RFID-Transponderetiketts zu kennzeichnenden Objektes die Funktion des RFID Transponders nicht verschieden von der jeweiligen Oberfläche beeinflussen und das RFID-Transponderetikett eine deutlich geringere Bauhöhe gegenüber bisher bekannten Lösungen aufweist.

Erfindungsgemäß wird die Aufgabe derart gelöst, dass bei einem RFID-Transponderetikett, der ein Trägersubstrat, eine auf dem Trägersubstrat angeordnete RFID-Transponderantenne und einen mit der RFID-Transponderantenne verbundenen RFID-Transponderchip, sowie mindestens zwei zusätzliche Schichten umfasst, wobei der Aufbau der zusätzlichen Schichten aus einer dem Trägersubstrat benachbarten ersten Schicht mit einem ersten magnetisch wirkenden Material und einer vom Trägersubstrat weiter als die erste Schicht entfernten zweiten Schicht mit einem zweiten magnetisch wirkenden Material besteht und das erste magnetisch wirkende Material und das zweite magnetisch wirkende Material unterschiedliche magnetische Eigenschaften aufweisen, vorgeschlagen, dass mindestens eine der zusätzlichen Schichten aus Folienmaterial aus ein oder mehreren Lagen besteht, wobei die Dicke der durch die Kombination der ersten und der zweiten Schicht realisierten magnetisch funktionalen Schicht maximal 0,3 mm ist und dass auf der dem Trägersubstrat abgewandten Seite der zweiten Schicht eine Klebeschicht zum Aufbringen des RFID-Transponderetiketts auf eine Oberfläche eines zu kennzeichnenden Objekts aufgebracht ist.

Zur elektromagnetischen Entkopplung des RFID Transponders zu Oberflächen von zu kennzeichnenden Objekten werden mindestens 2 Schichten von magnetisch unterschiedlich wirkendem Material zwischen der dem RFID Transponder und der Oberfläche von zu kennzeichnenden Objekten angebracht.

Hierzu werden auf dem RFID Transponder, bestehend aus der RFID-Transponderantenne mit einem montierten RFID-Transponderchip, eine erste Schicht eines ersten magnetisch wirkenden Materials und eine zweite Schicht eines zweiten magnetisch wirkenden Materials aufgebracht, wobei sich die beiden magnetisch wirkenden Materialien in ihren magnetischen Eigenschaften voneinander unterscheiden.

Das RFID-Transponderetikett wird dann so auf die Oberfläche von zu kennzeichnenden Objekten aufgebracht, dass die magnetisch wirkenden Schichten zwischen dem zu kennzeichnenden Objekt und dem RFID Transponder angeordnet sind.

Weitere mögliche zusätzliche Schichten, beispielsweise selbstklebende Schichten, bedruckte Oberlagen usw., ergänzen das RFID-Transponderetikett allgemein bekannter Art zu einem finalen Produkt.

In einer Ausführung wird eine ferromagnetische Schicht unter dem RFID-Transponder (RFID-Transponderantenne mit dem montierten RFID-Transponderchip) angeordnet und auf dieser ferromagnetisch wirkenden Schicht eine zweite, diamagnetisch wirkende Schicht angeordnet.

Durch diese Kombination von 2 unterschiedlichen magnetisch wirkenden Schichten wird erreicht, dass bei einem RFID-Transponderetikett, welches auf unterschiedlichen Oberflächen von zu kennzeichnenden Objekten aufgebracht wird, wobei die Oberfläche des zu kennzeichnenden Objektes aus unterschiedlichen Materialien bestehen, die Funktion des Transponders nicht durch die unterschiedlichen Oberflächen verschieden beeinflusst wird.

Zugleich wird durch diese Anordnung eine deutlich geringere Bauhöhe des RFID-Transponderetiketts insgesamt und besonders der magnetisch wirkenden Schichten erreicht. Durch die Kombination von zwei unterschiedlich magnetisch wirkenden Schichten wird eine Bauhöhe der magnetisch funktionalen Schicht von maximal 0,3 mm realisiert. Beide magnetisch wirkende Schichten sind so aufeinander abgestimmt, dass sie in Kombination miteinander unerwünschte Einflüsse des Materials der Oberfläche, auf der das RFID-Transponderetikett angebracht wird, kompensieren.

In WO 03/067512 hingegen wird ausgegangen von einer notwendigen Dicke der Ferritschicht von mindestens 1,5 mm. "Eine Reduzierung der Dicke zwischen 0,3 mm und 0,8 mm wird nur durch die Erhöhung der Permeabilität zwischen 13 und 17 erreicht."

Bei eigenen Untersuchungen der Anmelderin hat sich gezeigt, dass die dafür erforderliche Dicke der ferromagnetischen Schicht zwischen 0,05 mm und 0,2 mm liegen und die Permeabilität dieser Schicht zwischen 10 < µ < 60 liegen sollte. Die diamagnetische Schicht mit einer Permeabilität von <1 hat eine Dicke von maximal 0,1mm.

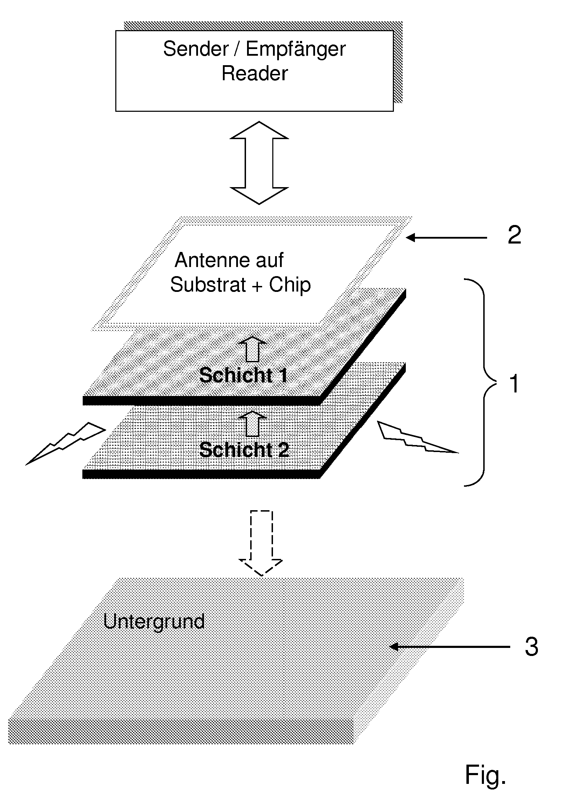

Ein Ausführungsbeispiel ist in der Figur dargestellt.

Darin wird mit dem Bezugszeichen 1 der magnetisch wirkende Schichtaufbau mit einer ersten Schicht aus ferromagnetisch wirkendem Material und einer zweiten Schicht aus nicht ferromagnetisch wirkendem Material bezeichnet. Im Ausführungsbeispiel ist die Schicht aus nicht ferromagnetisch wirkendem Material diamagnetisch wirkend ausgeführt. Sie könnte jedoch auch als paramagnetisch wirkend ausgeführt sein.

Das Bezugszeichen 2 bezeichnet den RFID-Transponder, der eine RFID-Transponderantenne und einen auf der RFID-Transponderantenne montierten RFID-Transponderchip umfasst.

Die RFID-Transponderantenne und der RFID-Transponderchip sind im Ausführungsbeispiel auf einem Trägermaterial angebracht. Das Trägermaterial ist nicht separat dargestellt, denn die magnetisch wirkenden Schichten 1 können auf der Oberseite des Trägermaterials, d.h. unter der RFID-Transponderantenne und dem RFID-Transponderchip, oder auf der Unterseite des Trägermaterials angeordnet sein. Im letzteren Falle bildet das Substrat eine Trennschicht zwischen den magnetisch wirkenden Schichten 1 und dem RFID-Transponder mit RFID-Transponderantenne und RFID-Transponderchip.

Der RFID-Transponder 2 kann auf der Oberfläche 3 von zu kennzeichnenden Objekten, die beispielsweise aus einem metallischen Material besteht, angebracht werden. Hierzu kann beispielsweise eine Klebstoffschicht an der Unterseite des RFID-Transponderetiketts angebracht sein, die im Falle von auf der Unterseite des Substrats angeordneten magnetischen Schichten 1 diese direkt bedeckt, während die Klebstoffschicht die Unterseite des Substrats bedeckt, wenn die magnetisch wirkenden Schichten 1 auf der Oberseite des Substrats angeordnet sind.

Die physikalische Wirkungsweise der magnetisch wirkenden Schichten lässt sich wie folgt beschreiben:
Die ferromagnetisch wirkende Schicht bündelt die vom RFID-Reader ankommenden elektromagnetischen Wellen und konzentriert diese im Flächenbereich der RFID-Transponderantenne des RFID-Transponders. Damit wird stark eingeschränkt, dass sich die vom RFID-Reader ausgehenden elektromagnetischen Wellen in unmittelbarer Nähe der RFID-Transponderantenne ungehindert auf die metallische Oberflache treffen und damit in der Oberfläche des zu kennzeichnenden Objektes (in der metallischen Schicht) Wirbelströme erzeugen, welche sich direkt gegen die eintreffenden elektromagnetischen Wellen richten und diese "auslöschen". Zur Erzielung dieser Wirkung ist eine minimale Dicke dieser ferromagnetisch wirkenden Schicht, bei gegebener Permeabilität, von minimal von 0,3 mm bis 0,8 mm erforderlich (siehe hierzu auch WO 03/067512.)

Die in einer Ausführungsform beschriebene angeordnete zweite magnetisch wirkende Schicht mit diamagnetischen Eigenschaften, beispielsweise mit einer Permeabilität kleiner 1, bewirkt ihrerseits eine Streuung der elektromagnetischen Wellen und damit eine Feldverdrängung.

Damit werden die durch die Wirkung der ferromagnetischen Schicht im Flächenbereich der RFID-Transponderantenne gebündelten elektromagnetischen Wellen wieder gestreut und gezielt nach außen geleitet. Dieser Effekt bewirkt, dass unterhalb der RFID-Transponderantenne die Anzahl elektromagnetisch wirkender Wellen deutlich reduziert und damit die Ausbildung von Wirbelströmen in der Oberfläche ebenfalls deutlich verringert wird. Gleichzeitig wird durch die Wirkung der diamagnetischen Schicht eine Totalreflexion der elektromagnetischen Wellen auf der Oberfläche stark reduziert und damit erhöht sich auch die dem RFID-Transponder vom Reader zur Verfügung gestellte Energie.

## Patentansprüche

1. RFID-Transponderetikett, umfassend ein Trägersubstrat, eine auf dem Trägersubstrat angeordnete RFID-Transponderantenne und einen mit der RFID-Transponderantenne verbundenen RFID-Transponderchip (2), sowie mindestens zwei zusätzliche Schichten (1), wobei der Aufbau der zusätzlichen Schichten (1) aus einer dem Trägersubstrat benachbarten ersten Schicht mit einem ersten magnetisch wirkenden Material und einer vom Trägersubstrat weiter als die erste Schicht entfernten zweiten Schicht mit einem zweiten magnetisch wirkenden Material besteht und das erste magnetisch wirkende Material und das zweite magnetisch wirkende Material unterschiedliche magnetische Eigenschaften aufweisen, **dadurch gekennzeichnet, dass** mindestens eine der zusätzlichen Schichten (1) aus Folienmaterial aus ein oder mehreren Lagen besteht, wobei die Dicke der durch die Kombination der ersten und der zweiten Schicht realisierten magnetisch funktionalen Schicht (1) maximal 0,3 mm ist und dass auf der dem Trägersubstrat abgewandten Seite der zweiten Schicht eine Klebeschicht zum Aufbringen des RFID-Transponderetiketts auf eine Oberfläche (3) eines zu kennzeichnenden Objekts aufgebracht ist.

2. RFID-Transponderetikett nach Anspruch 1 **dadurch gekennzeichnet, dass** die geometrischen Abmessungen, welche eine Länge sowie eine Breite umfassen, der beiden unterschiedlich magnetisch wirkenden Schichten (1) unterschiedlich groß sind.

3. RFID-Transponderetikett nach Anspruch 1 oder 2 **dadurch gekennzeichnet, dass** die geometrischen Abmessungen der magnetisch wirkenden Schichten (1) unterschiedlich zur Größe des RFID Transponders (2) und/oder zur Fläche der Transponderantenne sind.

4. RFID-Transponderetikett nach einem der Ansprüche 1 bis 3, **dadurch gekennzeichnet, dass** die magnetisch wirkenden Schichten (1) selbst aus mehreren, einzeln magnetisch wirkenden Lagen bestehen.

5. RFID-Transponderetikett nach einem der Ansprüche 1 bis 4, **dadurch gekennzeichnet, dass** das magnetisch wirkende Material auf einen isolierenden Träger aufgebracht ist, welcher selbst keine magnetisch wirksamen Eigenschaften besitzt.

6. RFID-Transponderetikett nach einem der Ansprüche 1 bis 5, **dadurch gekennzeichnet, dass** mindestens eine magnetisch wirkende Schicht aus diamagnetischem Material besteht und in der Schicht diamagnetische Werkstoffe, beispielsweise Gold, Schwefel, Blei, Wismut oder deren Kombinationen enthalten sind.

7. RFID-Transponderetikett nach einem der Ansprüche 1 bis 4 oder 6, **dadurch gekennzeichnet, dass** mindestens eine magnetisch wirkende Schicht unter Verwendung von organischen oder/und anorganischen Pasten oder deren Gemischen mit magnetisch wirkenden Partikeln hergestellt ist.

8. RFID-Transponderetikett nach Anspruch 7, **dadurch gekennzeichnet, dass** mindestens eine magnetisch wirkende Schicht durch ein Druckverfahren hergestellt ist.

9. RFID-Transponderetikett nach Anspruch 1 bis 6, **dadurch gekennzeichnet, dass** mindestens eine magnetisch wirkende Schicht durch vakuumtechnisches, galvanisches oder stromloses Abscheiden hergestellt ist.

10. RFID-Transponderetikett nach Anspruch 9, **dadurch gekennzeichnet, dass** mindestens eine magnetisch wirkende Schicht auf einen nicht magnetisch wirkenden Träger aufgebracht ist.

11. RFID-Transponderetikett nach Anspruch 9, **dadurch gekennzeichnet, dass** mindestens eine magnetisch wirkende Schicht auf eine magnetisch wirkende Schicht oder/und einen magnetisch wirkenden Träger aufgebracht ist.

12. RFID-Transponderetikett nach einem der Ansprüche 9 bis 11, **dadurch gekennzeichnet, dass** mindestens eine magnetisch wirkende Schicht zusätzlich strukturiert ist.

13. RFID-Transponderetikett nach einem der Ansprüche 1 bis 12, **dadurch gekennzeichnet, dass** die Oberfläche mindestens einer magnetisch wirkenden Schicht in der Oberflächenausführung strukturiert ist.

14. RFID-Transponderetikett nach Anspruch 13, **dadurch gekennzeichnet, dass** die Oberfläche mindestens einer magnetisch wirkenden Schicht durch mechanisch wirkende Verfahren, z.B. durch Prägen, strukturiert ist.

## Claims

1. RFID transponder label, comprising a carrier substrate, an RFID transponder antenna arranged on the carrier substrate and an RFID transponder chip (2) connected to the RFID transponder antenna, and also at least two additional layers (1), wherein the structure of the additional layers (1) consists of a first layer with a first magnetically acting material that is adjacent to the carrier substrate and a second layer with a second magnetically acting material that is further away from the carrier substrate than the first layer, and the first magnetically acting material and the second magnetically acting material have different magnetic properties, **characterized in that** at least one of the additional layers (1) consists of film material comprising one or more plies, the thickness of the magnetically functional layer (1) that is realized by the combination of the first and second layers being a maximum of 0.3 mm, and **in that** applied on the side of the second layer that is facing away from the carrier substrate there is an adhesive layer for applying the RFID transponder label to the surface (3) of an object to be identified.

2. RFID transponder label according to Claim 1, **characterized in that** the geometrical dimensions, which comprise a length and a width, of the two differently magnetically acting layers (1) are of different magnitudes.

3. RFID transponder label according to Claim 1 or 2, **characterized in that** the geometrical dimensions of the magnetically acting layers (1) are different from the size of the RFID transponder (2) and/or the area of the transponder antenna.

4. RFID transponder label according to one of Claims 1 to 3, **characterized in that** the magnetically acting layers (1) themselves consist of multiple, individually magnetically acting plies.

5. RFID transponder label according to one of Claims 1 to 4, **characterized in that** the magnetically acting material is applied to an insulating carrier which itself has no magnetically active properties.

6. RFID transponder label according to one of Claims 1 to 5, **characterized in that** at least one magnetically acting layer consists of diamagnetic material and the layer contains diamagnetic substances, for example gold, sulphur, lead, bismuth or combinations thereof.

7. RFID transponder label according to one of Claims 1 to 4 or 6, **characterized in that** at least one magnetically acting layer is produced using organic and/or inorganic pastes or mixtures thereof with magnetically acting particles.

8. RFID transponder label according to Claim 7, **characterized in that** at least one magnetically acting layer is produced by a printing process.

9. RFID transponder label according to Claims 1 to 6, **characterized in that** at least one magnetically acting layer is produced by vacuum deposition, electroplating or electroless plating.

10. RFID transponder label according to Claim 9, **characterized in that** at least one magnetically acting layer is applied to a non-magnetically acting carrier.

11. RFID transponder label according to Claim 9, **characterized in that** at least one magnetically acting layer is applied to a magnetically acting layer and/or a magnetically acting carrier.

12. RFID transponder label according to one of Claims 9 to 11, **characterized in that** at least one magnetically acting layer is additionally structured.

13. RFID transponder label according to one of Claims 1 to 12, **characterized in that** the surface of at least one magnetically acting layer is structured in the surface finish.

14. RFID transponder label according to Claim 13, **characterized in that** the surface of at least one magnetically acting layer is structured by mechanically acting processes, for example by embossing.

## Revendications

1. Etiquette de transpondeur RFID comprenant un substrat de support, une antenne de transpondeur RFID disposée sur le substrat de support, une puce (2) de transpondeur RFID raccordée à l'antenne de transpondeur RFID ainsi qu'au moins deux couches supplémentaires (1), la structure des couches supplémentaires (1) étant constituée d'une première couche voisine du substrat de support et présentant un premier matériau à action magnétique et une deuxième couche plus éloignée du substrat de support que la première couche et dotée d'un deuxième matériau à action magnétique, le premier matériau à action magnétique et le deuxième matériau à action magnétique présentant des propriétés magnétiques différentes,
**caractérisée en ce que**
au moins l'une des couches supplémentaires (1) est constituée d'un matériau en film constitué d'une ou plusieurs strates, l'épaisseur de la couche (1) à fonction magnétique réalisée par la combinaison de la première et de la deuxième couche étant d'au plus 0,3 mm et
**en ce qu'**une couche d'adhésif est appliquée sur le côté de la deuxième couche non tourné vers le substrat de support pour appliquer l'étiquette de transpondeur RFID sur une surface (3) d'un objet à caractériser.

2. Etiquette de transpondeur RFID selon la revendication 1, **caractérisée en ce que** les dimensions géométriques, qui comprennent une longueur ainsi qu'une largeur, des deux couches (1) à actions magnétiques différentes ont des tailles différentes.

3. Etiquette de transpondeur RFID selon les revendications 1 ou 2, **caractérisée en ce que** les dimensions géométriques des couches (1) à action magnétique sont différentes de la taille du transpondeur RFID (2) et/ou de la surface de l'antenne du transpondeur.

4. Etiquette de transpondeur RFID selon l'une des revendications 1 à 3, **caractérisée en ce que** les couches (1) à action magnétique sont elles-mêmes constituées de plusieurs strates différentes à action magnétique.

5. Etiquette de transpondeur RFID selon l'une des revendications 1 à 4, **caractérisée en ce que** le matériau à action magnétique est appliqué sur un support isolant qui ne possède lui-même pas de propriété d'action magnétique.

6. Etiquette de transpondeur RFID selon l'une des revendications 1 à 5, **caractérisée en ce qu'**au moins une couche à action magnétique est constituée d'un matériau diamagnétique et **en ce que** des matériaux diamagnétiques, par exemple de l'or, du soufre, du plomb, du bismuth ou leurs combinaisons sont repris dans la couche.

7. Etiquette de transpondeur RFID selon l'une des revendications 1 à 4 ou 6, **caractérisée en ce qu'**au moins une couche à action magnétique est réalisée en recourant à des pâtes organiques et/ou minérales ou leurs mélanges avec des particules à action magnétique.

8. Etiquette de transpondeur RFID selon la revendication 7, **caractérisée en ce qu'**au moins une couche à action magnétique est réalisée par un procédé d'impression.

9. Etiquette de transpondeur RFID selon les revendications 1 à 6, **caractérisée en ce qu'**au moins une couche à action magnétique est réalisée par dépôt galvanique ou sans courant sous vide.

10. Etiquette de transpondeur RFID selon la revendication 9, **caractérisée en ce qu'**au moins une couche à action magnétique est appliquée sur un support sans action magnétique.

11. Etiquette de transpondeur RFID selon la revendication 9, **caractérisée en ce qu'**au moins une couche à action magnétique est appliquée sur une couche à action magnétique et/ou sur un support à action magnétique.

12. Etiquette de transpondeur RFID selon l'une des revendications 9 à 11, **caractérisée en ce qu'**au moins une couche à action magnétique est de plus structurée.

13. Etiquette de transpondeur RFID selon l'une des revendications 1 à 12, **caractérisée en ce que** la surface d'au moins une couche à action magnétique est structurée dans sa surface.

14. Etiquette de transpondeur RFID selon la revendication 13, **caractérisée en ce que** la surface d'au moins une couche à action magnétique est structurée par un procédé agissant mécaniquement, par exemple par gaufrage.
